# FASCICULE DE BREVET EUROPEEN

(11) **EP 3 167 343 B1**
(45) Date de publication et mention de la délivrance du brevet: **28.08.2019**
(21) Numéro de dépôt: 15734213.0
(22) Date de dépôt: 09.07.2015
(51) Int. Cl.: G06F 1/10, G08C 17/02

(54) **PROCÉDÉ D'AJUSTEMENT D'UN SIGNAL DE CADENCE D'UN CIRCUIT D'ÉMISSION/RÉCEPTION, DISPOSITIF DE CONTRÔLE, SYSTÈME DE CONTRÔLE, ACTIONNEUR ET UNITÉ DE COMMANDE ASSOCIÉS**
VERFAHREN ZUR EINSTELLUNG EINES TAKTSIGNALS EINER SENDE-/EMPFANGSSCHALTUNG UND ENTSPRECHENDE STEUERUNGSVORRICHTUNG, STEUERUNGSSYSTEM, AKTUATOR UND STEUERUNGSEINHEIT
METHOD FOR ADJUSTING A TIMING SIGNAL OF A TRANSMISSION/RECEPTION CIRCUIT, AND ASSOCIATED CONTROL DEVICE, CONTROL SYSTEM, ACTUATOR AND CONTROL UNIT

(30) Priorité: 11.07.2014 FR 1456715
(43) Date de publication de la demande: 17.05.2017
(73) Titulaire: Somfy Activites SA, 74300 Cluses (FR)
(72) Inventeur: DESBIOLLES, Claude, F-74800 Eteaux (FR); GERMAIN, Florian, F-74960 Meythet (FR)
(74) Mandataire: Lavoix
(86) Numéro de dépôt international: PCT/EP2015/065759
(87) Numéro de publication internationale: WO 2016/005525

(56) Documents cités:
- EP-A1- 1 793 301
- GB-A- 2 199 469
- US-A1- 2004 174 945
- US-A1- 2012 314 738

## Description

La présente invention concerne un procédé d'ajustement d'un signal de cadence d'un circuit d'émission/réception de données asynchrones, le circuit étant inclus dans un dispositif de contrôle d'un actionneur domotique. L'invention concerne également un dispositif de contrôle d'un actionneur domotique associé au procédé, un système de contrôle de l'actionneur domotique comprenant un tel dispositif de contrôle, un actionneur domotique comprenant un tel système de contrôle et une unité de commande d'un actionneur domotique comprenant un tel système de contrôle.

Les actionneurs domotiques considérés sont, par exemple, des actionneurs d'éléments mobiles de fermeture, d'occultation ou de protection solaire, tel qu'un volet, une porte, une grille, un store, ou tout autre matériel équivalent. Ces actionneurs domotiques comprennent un organe d'actionnement électromécanique, tel qu'un moteur, propre à actionner les éléments mobiles de fermeture. Les actionneurs domotiques considérés peuvent être aussi des équipements d'éclairage, de chauffage, de ventilation ou de climatisation.

Le système de contrôle considéré comprend un dispositif de contrôle de l'actionneur domotique, et un module de communication radioélectrique, extérieur au dispositif de contrôle.

Le dispositif de contrôle comprend une unité de traitement d'information et différents périphériques, tels que des bornes d'entrée-sortie, des unités de gestion de temps, des circuits de communication dont un premier circuit d'émission/réception de données asynchrones.

L'unité de traitement d'information et les périphériques ont besoin, pour le cadencement de leurs opérations respectives, de signaux d'horloge. Le dispositif de contrôle comprend des moyens d'obtention d'un premier signal d'horloge. Il comprend également des moyens de génération et de distribution des signaux d'horloge nécessaires à l'unité de traitement d'information et aux périphériques du dispositif de contrôle. Ces moyens de génération et de distribution des signaux d'horloge, connus dans l'état de la technique sous le nom d' « arbre d'horloge » (également appelé « clock tree » en anglais), génèrent, à partir du premier signal d'horloge, les signaux d'horloge nécessaires à l'unité de traitement d'information et aux périphériques du dispositif de contrôle.

Le premier circuit d'émission/réception de données asynchrones est propre à être cadencé par un premier signal de cadence, et destiné à communiquer via une liaison électrique avec un deuxième circuit d'émission/réception de données asynchrones appartenant au module de communication radioélectrique, de manière à former une interface de communication entre le dispositif de contrôle et le module de communication radioélectrique.

Le module de communication radioélectrique est propre à communiquer via un signal radioélectrique avec un autre module de communication radioélectrique, appartenant par exemple à une unité de commande à distance de l'actionneur domotique, ou encore à un autre actionneur domotique.

Le deuxième circuit d'émission/réception de données asynchrones est propre à être cadencé par un deuxième signal de cadence. Les premier et deuxième signaux de cadence permettent de définir la fréquence de transmission et de réception des données pour chaque circuit d'émission/réception de données asynchrones. Les premier et deuxième signaux de cadence ont chacun une fréquence susceptible de dériver avec la température et avec le temps.

Les circuits d'émission/réception sont qualifiés d'asynchrones dans le sens où les deux circuits d'émission/réception transmettent uniquement des données, c'est-à-dire qu'ils ne transmettent pas simultanément aux données un signal d'horloge. Les données transmises comprennent, par exemple, un nombre prédéterminé de bits de données, par exemple égal à 8, précédés d'un bit de début, également appelé bit de START et suivis d'un bit de fin, également appelé bit de STOP.

Afin de garantir un fonctionnement normal de la communication entre les circuits d'émission/réception de données asynchrones, une première contrainte de dérive en fréquence des premier et deuxième signaux de cadence est définie. La première contrainte consiste en ce qu'une première dérive en fréquence acceptable pour chaque signal de cadence est telle que la fréquence des premier et deuxième signaux de cadence est comprise dans une plage de valeurs autour d'une première fréquence de référence désirée des signaux de cadence, par exemple dans une plage de ± 0.7% autour de la première fréquence de référence. Cette contrainte est imposée par les caractéristiques techniques des circuits électroniques choisis.

Afin d'assurer un fonctionnement normal de l'unité de traitement d'information et des périphériques du dispositif de contrôle, le premier signal d'horloge doit être conforme à une deuxième contrainte. La deuxième contrainte consiste en ce qu'une deuxième dérive en fréquence acceptable pour le premier signal d'horloge est telle que la fréquence du premier signal d'horloge est comprise dans une plage de valeurs autour d'une deuxième fréquence de référence désirée du premier signal d'horloge. La deuxième contrainte est imposée par les caractéristiques de l'application domotique, notamment par les contraintes de réponse en temps réel. Pour une application domotique, par exemple, une plage autour de la deuxième fréquence de référence est de ±2.5%

La deuxième contrainte est, dans le cas d'une application domotique, moins restrictive que la première contrainte.

En d'autres termes, si le premier signal de cadence est obtenu à partir du premier signal d'horloge de manière classique, par division par un facteur constant, alors la dérive en fréquence du premier signal de cadence sera la même que la dérive du premier signal d'horloge. A cette dérive peuvent éventuellement se rajouter des erreurs de quantification, dues aux techniques connues de division. Par conséquent, la précision du premier signal de cadence est, dans le meilleur des cas, la même que la précision du premier signal d'horloge, c'est-à-dire conforme à la deuxième contrainte. La première contrainte de dérive en fréquence, étant plus restrictive que la deuxième contrainte, peut ne pas être respectée pour le premier signal de cadence dans ce cas.

Par ailleurs, le module de communication radioélectrique, pour des besoins spécifiques radio, est équipé d'un premier quartz qui génère un signal d'horloge de haute précision, dit signal d'horloge radio. Le module de communication radioélectrique utilise le signal d'horloge radio pour la radiocommunication, pour la génération des signaux d'horloge nécessaires au cadencement de ses blocs internes, dont le deuxième circuit d'émission/réception de données asynchrones, et pour la génération d'un signal d'horloge radio externe sur une de ses bornes de sortie, réservée à cet effet. Ce signal d'horloge radio externe est disponible pour une utilisation par des circuits distincts du module de communication radioélectrique.

Afin d'assurer un fonctionnement normal du module de communication radioélectrique, le signal d'horloge radio doit être conforme à une troisième contrainte. La troisième contrainte consiste en ce qu'une troisième dérive en fréquence acceptable du signal d'horloge radio est telle que la fréquence de ce signal est comprise dans une plage de valeurs autour d'une troisième fréquence de référence désirée du signal d'horloge radio, par exemple une plage de ±40ppm (parties par million) autour de la troisième fréquence de référence. Le signal d'horloge radio respecte ainsi une contrainte plus restrictive que la première contrainte. Par conséquent, le deuxième signal de cadence et le signal d'horloge radio externe, qui sont générés à partir du signal d'horloge radio, respectent la première contrainte de dérive en fréquence.

Afin que le premier signal de cadence respecte la première contrainte de dérive en fréquence, il est connu de générer le premier signal de cadence à partir du premier signal d'horloge et d'obtenir ce premier signal d'horloge à partir d'un composant externe, tel qu'un deuxième quartz de haute précision. Cependant, une telle solution est complexe, volumineuse et coûteuse puisqu'un quartz de haute précision dédié est nécessaire pour le dispositif de contrôle.

Il est notamment connu du document EP 1 793 301 A1, un procédé et un appareil permettant d'obtenir un signal d'horloge stable dans un circuit d'émission/réception de données asynchrones.

Une autre solution connue est d'obtenir le premier signal d'horloge à partir du signal d'horloge radio externe, en routant ce signal depuis la borne de sortie du module de communication radioélectrique réservée à sa génération vers une borne d'entrée d'horloge du dispositif de contrôle. Le signal d'horloge radio externe est alors utilisé par le dispositif de contrôle en tant que premier signal d'horloge. Le premier signal d'horloge et le signal d'horloge radio externe ont par conséquent les mêmes caractéristiques, en particulier la même fréquence et la même dérive. Le premier signal d'horloge obtenu de cette manière respecte ainsi la troisième contrainte (la plus forte) de dérive en fréquence. Le premier signal de cadence étant obtenu à partir du premier signal d'horloge, il respecte la même contrainte de dérive, c'est-à-dire la troisième contrainte (la plus forte), à laquelle peut être ajoutée une éventuelle erreur de quantification, négligeable devant les première et la deuxième contraintes.

Cependant, le routage du signal d'horloge radio externe, qui a la fréquence désirée pour le premier signal d'horloge, est complexe à réaliser et crée des perturbations électromagnétiques au sein du dispositif de contrôle. En effet, la fréquence désirée du premier signal d'horloge pour que l'unité de traitement d'information du dispositif de contrôle assure l'exécution de l'application domotique, est assez élevée, typiquement de l'ordre des dizaines de MHz. Or, le bruit généré par le conducteur qui sert de support au routage sur la carte électronique du signal d'horloge radio externe est important dans ce domaine de fréquences.

Le but de l'invention est donc de proposer un procédé d'ajustement d'un signal de cadence d'un circuit d'émission/réception de données asynchrones permettant de diminuer le volume et le coût du dispositif de contrôle, tout en respectant la première contrainte de dérive en fréquence pour le premier signal de cadence, et en optimisant les performances du dispositif de contrôle, notamment en termes de rapport signal sur bruit.

A cet effet, l'invention concerne un procédé d'ajustement d'un signal de cadence d'un circuit d'émission/réception de données asynchrones, le circuit d'émission/réception étant inclus dans un dispositif de contrôle d'un actionneur domotique, le dispositif de contrôle comprenant des moyens de génération du signal de cadence à partir d'un premier signal d'horloge et des moyens de réception d'un deuxième signal d'horloge.

Conformément à l'invention, le premier signal d'horloge présente une valeur de fréquence parmi une pluralité de valeurs prédéterminées de fréquence, et le procédé comprend :
- une étape de détermination d'un nombre théorique de périodes du premier signal d'horloge à compter pendant une durée d'un nombre prédéfini de périodes du deuxième signal d'horloge, où pendant la durée du nombre prédéfini de périodes du deuxième signal d'horloge un seul nombre théorique de périodes du premier signal d'horloge est attendu pour chaque valeur prédéterminée de fréquence du premier signal d'horloge, l'étape de détermination comprenant une sous-étape de sélection du nombre théorique de périodes parmi une pluralité de nombres prédéterminés, cette sélection étant effectuée en fonction d'un paramètre relatif à la valeur de la fréquence du premier signal d'horloge ;
- une étape de comptage d'un nombre effectif de périodes du premier signal d'horloge pendant la durée du nombre prédéfini de périodes du deuxième signal d'horloge ;
- une étape d'ajustement de la fréquence du signal de cadence par les moyens de génération en fonction du nombre effectif de périodes comptées et du nombre théorique de périodes sélectionné, de sorte à ce que le signal de cadence ait une fréquence sensiblement constante quelle que soit la valeur de la fréquence du premier signal d'horloge.

Grâce à l'invention, le volume et le coût du dispositif de contrôle sont réduits, puisque le premier signal d'horloge est utilisé pour générer le premier signal de cadence du dispositif de contrôle. En outre, la première contrainte liée à la première dérive en fréquence de ce signal de cadence est respectée, puisque sa fréquence est ajustée en fonction du nombre effectif de périodes comptées et du nombre théorique de périodes, c'est-à-dire en fonction de la dérive en fréquence du premier signal d'horloge par rapport au deuxième signal d'horloge.

Selon des aspects avantageux de l'invention, le procédé d'ajustement comprend en outre une ou plusieurs des caractéristiques suivantes, prises isolément ou selon toutes les combinaisons techniquement possibles :
- Les moyens de génération du signal de cadence sont adaptés pour diviser la fréquence du premier signal d'horloge ou la fréquence d'un premier signal d'horloge modifié dépendant du premier signal d'horloge, par un facteur de division ayant une valeur initiale prédéterminée, et lors de l'étape d'ajustement, la valeur du facteur de division est modifiée en fonction du nombre effectif de périodes comptées et du nombre théorique de périodes.
- Au moins les étapes de comptage et d'ajustement sont effectuées périodiquement, à une période d'ajustement, de préférence égale à un multiple entier de la durée du nombre prédéfini de périodes du deuxième signal d'horloge.
- La valeur de la période d'ajustement est comprise entre deux valeurs prédéfinies.
- La période d'ajustement est au moins 1000 fois supérieure à la période du deuxième signal d'horloge.

L'invention concerne un dispositif de contrôle d'un actionneur domotique comprenant : des moyens d'obtention d'un premier signal d'horloge, un circuit d'émission/réception de données asynchrones, propre à être cadencé par un signal de cadence, des premiers moyens de génération du signal de cadence à partir du premier signal d'horloge et des moyens de réception d'un deuxième signal d'horloge. Conformément à l'invention, le premier signal d'horloge présente une valeur de fréquence parmi une pluralité de valeurs prédéterminées de fréquence, et le dispositif comprend des moyens de détermination d'un nombre théorique de périodes du premier signal d'horloge à compter pendant une durée d'un nombre prédéfini de périodes du deuxième signal d'horloge, où pendant la durée du nombre prédéfini de périodes du deuxième signal d'horloge un seul nombre théorique de périodes du premier signal d'horloge est attendu pour chaque valeur prédéterminée de fréquence du premier signal d'horloge, des moyens de sélection du nombre théorique de périodes parmi une pluralité de nombres prédéterminés, cette sélection étant effectuée en fonction d'un paramètre relatif à la valeur de la fréquence du premier signal d'horloge, et des moyens de comptage d'un nombre effectif de périodes du premier signal d'horloge pendant la durée d'un nombre prédéfini de périodes du deuxième signal d'horloge. Les premiers moyens de génération sont, en outre, adaptés pour ajuster la fréquence du signal de cadence en fonction du nombre effectif de périodes comptées et du nombre théorique de périodes sélectionné, de sorte à ce que le signal de cadence ait une fréquence sensiblement constante quelle que soit la fréquence du premier signal d'horloge.

Selon d'autres aspects avantageux de l'invention, le dispositif de contrôle comprend en outre la caractéristique suivante :
- Les moyens de comptage comprennent un premier module de comptage du nombre de périodes du premier signal d'horloge, un registre de stockage de la valeur du nombre prédéfini de périodes du deuxième signal d'horloge, et un deuxième module de comptage apte à compter des fronts du deuxième signal d'horloge et à générer un signal informatif lorsque le nombre compté de fronts correspond au nombre prédéfini de périodes du deuxième signal d'horloge, les moyens de comptage étant adaptés pour acquérir le nombre compté de périodes du premier signal d'horloge suite à la génération du signal informatif, pour compter le nombre effectif de périodes.

L'invention concerne un système de contrôle d'un actionneur domotique le système de contrôle comprenant un dispositif de contrôle de l'actionneur domotique, le dispositif de contrôle comprenant un premier circuit d'émission/réception de données asynchrones, un module de communication radioélectrique comprenant un deuxième circuit d'émission/réception de données asynchrones, le module de communication radioélectrique étant apte à communiquer avec le dispositif de contrôle par l'intermédiaire d'une liaison électrique entre le premier circuit d'émission/réception et le deuxième circuit d'émission/réception, et à générer un signal d'horloge radio externe. Conformément à l'invention, le dispositif de contrôle est tel que défini ci-dessus, et le deuxième signal d'horloge reçu par les moyens de réception est le signal d'horloge radio externe.

Avantageusement, le deuxième signal d'horloge a une fréquence au moins 2 fois inférieure à la fréquence du premier signal d'horloge du dispositif de contrôle.

L'invention concerne également un actionneur domotique comprenant un système de contrôle tel que défini ci-dessus.

L'invention concerne, en outre, une unité de commande par radiofréquence d'au moins un actionneur domotique, l'unité de commande comprenant un système de contrôle tel que défini ci-dessus.

L'invention sera mieux comprise et d'autres avantages de celle-ci apparaîtront à la lumière de la description qui va suivre, donnée uniquement à titre d'exemple non limitatif, et faite en se référant aux dessins annexés sur lesquels :
- la figure 1 est une représentation schématique d'un actionneur domotique conforme à l'invention ;
- la figure 2 est un organigramme d'un procédé d'ajustement conforme à l'invention ;
- la figure 3 est une représentation schématique de l'actionneur de la figure 1 et d'une unité de commande de l'actionneur ;
- la figure 4 est une représentation schématique de l'amplitude d'un premier signal d'horloge pouvant prendre deux valeurs de fréquence en fonction du temps, et de l'amplitude d'un deuxième signal d'horloge en fonction du temps ; et
- la figure 5 est une représentation d'un tableau donnant un nombre théorique de périodes du premier signal d'horloge de la figure 4, pendant la durée d'un nombre prédéfini de périodes du deuxième signal d'horloge, en fonction de la fréquence du premier signal d'horloge.

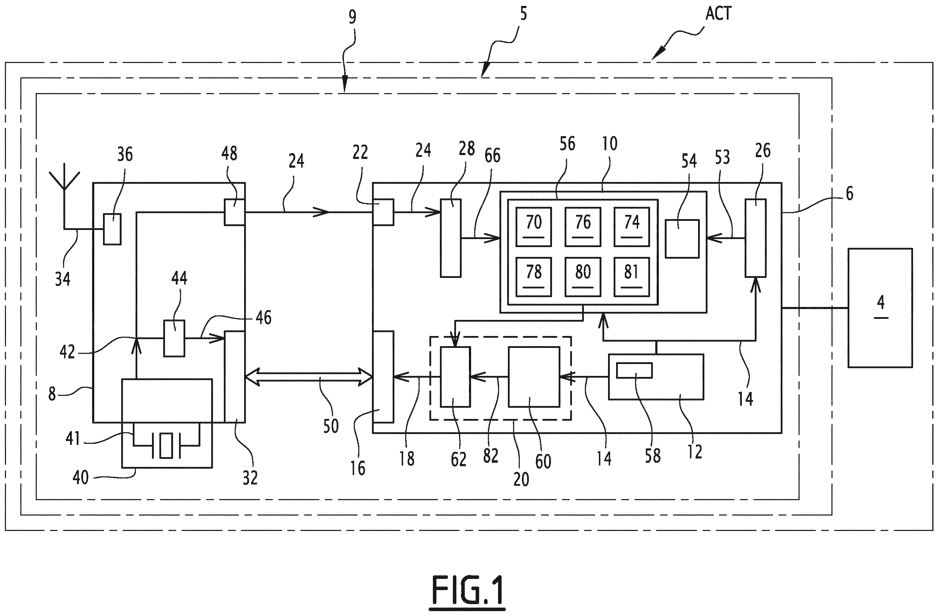

Un actionneur domotique ACT est représenté à la figure 1. L'actionneur domotique ACT comprend un organe d'actionnement électromécanique 4, tel qu'un bloc moteur et un module électronique 5 pour le pilotage de l'actionneur domotique ACT et notamment de l'organe d'actionnement électromécanique 4.

Le bloc moteur 4 est, par exemple, de forme tubulaire et présente un carter allongé pour être enfilé dans un tube d'enroulement, sur lequel un volet roulant s'enroule afin de libérer ou fermer un accès (porte de passage, fenêtre).

Le module électronique 5 comprend des moyens matériels et logiciels pour la mise en oeuvre des fonctions avancées, telles que l'alimentation et la génération des signaux de commande de l'organe d'actionnement électromécanique 4, la gestion des composants électroniques de l'actionneur ACT, notamment concernant leur état d'activation ou de veille, et l'exécution d'une application domotique embarquée. Le module électronique 5 comprend un dispositif de contrôle 6 propre à contrôler l'actionneur ACT, c'est-à-dire à stocker et exécuter l'application domotique pour le piloter.

Le module électronique 5 comprend également un module de communication radioélectrique 8, extérieur au dispositif de contrôle 6, et apte à communiquer par l'intermédiaire de radiofréquences avec une ou plusieurs unités de commande distantes.

Le dispositif de contrôle 6 et le module de communication radioélectrique 8 forment un système de contrôle 9 de l'actionneur ACT.

Le dispositif de contrôle 6 comprend une unité de traitement d'information 10, et des périphériques, tels que des bornes d'entrée-sortie, des unités de gestion de temps (également appelées « timers » en anglais), des convertisseurs analogique/numérique, des bus internes de données et d'adresses. L'unité de traitement d'information 10 et les périphériques utilisent, pour le cadencement de leurs opérations, un premier signal d'horloge 14, interne au dispositif de contrôle 6, ou des signaux d'horloge dérivés de ce premier signal d'horloge 14.

Le dispositif de contrôle 6 comprend un module d'obtention 12 de ce premier signal d'horloge 14, un premier circuit d'émission/réception 16 de données asynchrones propre à être cadencé par un premier signal de cadence 18, et un premier module 20 de génération du premier signal de cadence 18 à partir du premier signal d'horloge 14.

Le dispositif de contrôle 6 comprend un organe de réception 22 d'un deuxième signal d'horloge 24, externe au dispositif de contrôle 6. Dans cet exemple, le deuxième signal d'horloge 24 est généré par le module de communication radioélectrique 8 sur une borne du module de communication radioélectrique 8, réservée à cet effet. Le dispositif de contrôle 6 comprend également un premier module de comptage 26 du nombre de périodes du premier signal d'horloge 14 et un deuxième module de comptage 28 du nombre de périodes du deuxième signal d'horloge 24.

Comme déjà mentionné, le module de communication radioélectrique 8 est apte à communiquer avec une unité de commande distante, par l'intermédiaire de radiofréquences, c'est-à-dire via un signal radioélectrique. Le module de communication radioélectrique 8 comprend alors une antenne radioélectrique 34 et un émetteur-récepteur radioélectrique 36, pour la communication sans fil avec l'unité de commande distante UCMD.

En complément, le module de communication radioélectrique 8 comprend un deuxième circuit d'émission/réception 32.
Le module de communication radioélectrique 8 comprend également une unité de génération 40 d'un troisième signal d'horloge 42, interne au module de communication radioélectrique 8, à partir d'un signal d'horloge de précision 41. Le signal d'horloge de précision 41 est fourni par un quartz appartenant à l'unité de génération 40. Le module de communication radioélectrique 8 comprend également un deuxième module de génération 44 d'un deuxième signal de cadence 46, propre à cadencer le deuxième circuit d'émission/réception 32, et un circuit de génération 48 sur une de ses bornes de sortie d'un signal d'horloge radio externe à partir du troisième signal d'horloge 42. Le signal d'horloge radio externe constitue, dans cet exemple, le deuxième signal d'horloge 24.

Le module de communication radioélectrique 8 et le dispositif de contrôle 6 sont propres à communiquer l'un avec l'autre, par l'intermédiaire d'une liaison électrique 50 entre le premier circuit d'émission/réception de données asynchrones 16 et le deuxième circuit d'émission/réception de données asynchrones 32.

Le premier circuit d'émission/réception 16 est propre à transmettre des premières données asynchrones à destination du module de communication radioélectrique 8, via la liaison électrique 50 et le deuxième circuit d'émission/réception 32. Le premier circuit d'émission/réception 16 est également propre à recevoir des deuxièmes données asynchrones en provenance du module de communication radioélectrique 8, via la liaison électrique 50 et le deuxième circuit d'émission/réception 32.

Le deuxième circuit d'émission/réception 32 est propre à transmettre les deuxièmes données asynchrones à destination du dispositif de contrôle 6, via la liaison électrique 50 et le premier circuit d'émission/réception 16. Le deuxième circuit d'émission/réception 32 est également propre à recevoir les premières données asynchrones en provenance du dispositif de contrôle 6, via la liaison électrique 50 et le premier circuit d'émission/réception 16.

L'unité de génération 40 génère le troisième signal d'horloge 42 à partir du signal d'horloge de précision 41. Pour le fonctionnement normal du module de communication radioélectrique 8, la fréquence du signal d'horloge de précision 41 est conforme à la troisième contrainte présentée ci-dessus dans la partie introductive de cette demande. La fréquence du signal d'horloge de précision 41 est comprise dans une plage de valeurs autour d'une fréquence de référence désirée du signal d'horloge de précision 41, par exemple dans une plage de ±40 ppm autour de cette fréquence de référence. La fréquence de référence est par exemple égale à 30 MHz. La fréquence du troisième signal d'horloge 42, généré à partir du signal d'horloge de précision 41, respecte la même contrainte de dérive, c'est-à-dire la troisième contrainte (la plus forte), à laquelle peut être ajoutée une éventuelle erreur de quantification, négligeable devant les première et deuxième contraintes.

Le deuxième module de génération 44 est propre à diviser la fréquence du troisième signal d'horloge 42 pour obtenir le deuxième signal de cadence 46 du deuxième circuit d'émission/réception 32.

Le circuit de génération 48 est propre à diviser la fréquence du troisième signal d'horloge 42 pour obtenir le signal d'horloge radio externe, qui constitue dans cet exemple le deuxième signal d'horloge 24. Comme le troisième signal d'horloge 42 est conforme à la troisième contrainte de dérive en fréquence (la plus forte), le deuxième signal de cadence 46, et le deuxième signal d'horloge 24, étant générés à partir du troisième signal d'horloge 42, sont également conformes à cette troisième contrainte, à laquelle peut être ajoutée une éventuelle erreur de quantification, négligeable devant les première et deuxième contraintes de dérive en fréquence, présentées ci-dessus dans la partie introductive de cette demander.

L'unité de traitement d'informations 10 comprend un processeur 54 et une mémoire 56 comprenant des logiciels. Le dispositif de contrôle 6 présente, par exemple, d'une part, un premier mode de fonctionnement, dit mode actif, dans lequel le premier signal d'horloge 14 a une fréquence qui a une première valeur, par exemple égale à 24 MHz et d'autre part, au moins un deuxième mode de fonctionnement, dit mode de basse consommation, dans lequel la fréquence du premier signal d'horloge 14 a une deuxième valeur, inférieure à la première valeur, par exemple égale à 12 MHz.

Le module d'obtention 12 comprend un oscillateur 58 propre à générer le premier signal d'horloge 14. Avantageusement, le module d'obtention 12 est intégré dans l'unité de traitement d'information 10.

Le premier signal d'horloge 14 est apte à présenter différentes valeurs prédéterminées de fréquence, en fonction du mode de fonctionnement du dispositif de contrôle 6.

Dans une alternative non représentée, le premier signal d'horloge interne 14 est généré à partir d'un quatrième signal d'horloge généré par un composant externe au dispositif de contrôle 6, par exemple un oscillateur externe ou un circuit résonateur. Le dispositif de contrôle 6 comprend dans ce cas une borne réservée à la réception de ce quatrième signal d'horloge. Le quatrième signal d'horloge généré par ce composant doit respecter la deuxième contrainte de précision, suffisante pour le fonctionnement de l'unité de traitement d'information 10 et des différents périphériques du dispositif de contrôle 6, à l'exception du premier circuit d'émission/réception 16. Ceci permet l'utilisation d'un composant externe moins précis, et donc moins cher.

L'émission et la réception des premières, respectivement deuxièmes, données par le premier circuit d'émission/réception 16 sont cadencées par le premier signal de cadence 18.

Le premier module de génération 20 du premier signal de cadence 18 comprend un module de modification 60 du premier signal d'horloge interne 14 et un module d'ajustement 62 du premier signal de cadence 18. Le module de modification 60 est adapté pour délivrer un signal d'horloge interne modifié 82 à destination du premier circuit d'émission/réception 16, pour cadencer ses accès au bus interne auquel il est connecté et à ses registres de programmation. Le module d'ajustement 62 est propre générer le premier signal de cadence 18 à partir du signal d'horloge interne modifié 82, par des techniques connues, en programmant un ou plusieurs facteurs de division dans des registres dédiés du premier circuit d'émission/réception 16.

L'organe de réception 22 est une entrée spécifique du dispositif de contrôle 6, à laquelle est associé le deuxième module de comptage 28.

Le deuxième signal d'horloge 24 a une fréquence au moins 5 fois inférieure à la fréquence du premier signal d'horloge 14.

Le premier module de comptage 26 est apte à compter des fronts du premier signal d'horloge 14, c'est-à-dire des fronts montants et/ou descendants, pour compter un nombre de périodes du premier signal d'horloge 14.

Le deuxième module de comptage 28 est apte à compter des fronts du deuxième signal d'horloge 24, pour compter un nombre de périodes du deuxième signal d'horloge 24. Le deuxième module de comptage 28 est également propre à acquérir ou mémoriser un nombre prédéfini de périodes NP_DEF du deuxième signal d'horloge 24. Le deuxième module de comptage 28 est, en outre, apte à générer un signal informatif, correspondant par exemple à un signal d'interruption 66, lorsque le nombre compté de périodes du deuxième signal d'horloge 24 est égal au nombre prédéfini de périodes NP_DEF. Le module de comptage 28 est propre à transmettre le signal d'interruption 66 à l'unité de traitement d'information 10.

Selon une variante, le signal informatif est un signal autre qu'un signal d'interruption, par exemple une écriture dans un registre, et correspond de manière plus générale à un signal adapté pour indiquer à l'unité de traitement d'information 10 que le nombre compté de périodes du deuxième signal d'horloge 24 est égal au nombre prédéfini de périodes NP_DEF.

Le processeur 54 du dispositif de contrôle 6 est propre à exécuter les logiciels compris dans la mémoire 56.

La mémoire 56 comprend un logiciel de mémorisation 70 d'un facteur de division F_DIV de valeur initiale prédéterminée et d'un nombre théorique de périodes NP_ATT du premier signal d'horloge 14 à compter pendant la durée du nombre prédéfini de périodes NP_DEF du deuxième signal d'horloge 24, pour chaque valeur de fréquence prédéterminée du premier signal d'horloge 14, c'est-à-dire notamment pour chaque mode de fonctionnement du dispositif de contrôle 6.

La mémoire 56 comprend également un logiciel de détermination 74 de la fréquence du premier signal d'horloge 14 et/ou du mode de fonctionnement du dispositif de contrôle 6, et un logiciel de sélection 76 du nombre théorique de périodes NP_ATT correspondant à la fréquence du premier signal d'horloge 14, c'est-à-dire à la fréquence déterminée du premier signal d'horloge 14 et/ou au mode de fonctionnement déterminé du dispositif de contrôle 6.

En d'autres termes, le logiciel de mémorisation 70 est propre à associer pour chaque valeur prédéterminée de la fréquence du premier signal d'horloge 14, un paramètre relatif à cette fréquence et le nombre théorique de périodes à compter correspondant. Le logiciel de détermination 74 est alors propre à déterminer un paramètre relatif à la valeur de la fréquence du premier signal d'horloge 14 et le logiciel de sélection 76 est apte à sélectionner le nombre théorique de périodes NP_ATT correspondant au paramètre relatif déterminé.

Le dispositif de contrôle 6 comprend en outre des moyens matériels 26, 28, correspondant au premier module de comptage 26 et au deuxième module de comptage 28, et logiciels 78, de comptage d'un nombre effectif de périodes NP_EFF du premier signal d'horloge 14 comptées pendant la durée du nombre prédéfini de périodes NP_DEF du deuxième signal d'horloge 24 et un logiciel d'ajustement 80 de la fréquence du premier signal de cadence 18. Le comptage du nombre effectif de périodes NP_EFF correspond de manière plus générale à une détermination du nombre effectif de périodes NP_EFF.

Le module de modification 60 est adapté pour obtenir, à partir du premier signal d'horloge 14, le premier signal d'horloge interne modifié 82, et puis délivrer le premier signal d'horloge interne modifié 82 au premier circuit d'émission/réception 16. Le module de modification 60 est, par exemple, propre à modifier la fréquence du premier signal d'horloge pour obtenir le premier signal d'horloge interne modifié 82.

Le module d'ajustement 62 est propre à diviser la fréquence du premier signal d'horloge interne modifié 82 par le facteur de division F_DIV. Dans l'exemple de réalisation de la figure 1, le module de modification 60 et le module d'ajustement 62 sont des modules différents. En variante, les modules de modification 60 et d'ajustement 62 forment un même module.

Selon une autre variante, le dispositif de contrôle 6 ne comprend pas de module de modification 60 et comprend uniquement le module d'ajustement 62, qui reçoit le premier signal d'horloge 14 et divise la fréquence du premier signal d'horloge 14 par le facteur de division F_DIV.

Le logiciel de mémorisation 70 est propre à mémoriser le facteur de division F_DIV de valeur initiale prédéterminée, qui a été calculé et intégré au logiciel de mémorisation 70, préalablement à l'installation de l'actionneur ACT. De même, pour chaque valeur de fréquence du premier signal d'horloge 14, le nombre théorique de périodes NP_ATT a été calculé et transmis au logiciel de mémorisation 70, préalablement à l'installation de l'actionneur ACT.

Le logiciel de détermination 74 est, par exemple, propre à déterminer le mode de fonctionnement du dispositif de contrôle 6 et à déterminer la fréquence du premier signal d'horloge 14 en fonction du mode de fonctionnement déterminé.

Le logiciel de sélection 76 est propre à transmettre au logiciel de comptage 78 le nombre théorique de périodes NP_ATT du deuxième signal d'horloge 24 correspondant à la fréquence déterminée par le logiciel de détermination 74.

Le logiciel de comptage 78 est propre à compter le nombre effectif de périodes NP_EFF du premier signal d'horloge 14 apparues pendant la durée du nombre prédéfini de périodes NP_DEF du deuxième signal 24, c'est-à-dire pendant le décompte du nombre prédéfini NP_DEF, ce décompte étant effectué par le deuxième module de comptage 28. Le logiciel de comptage 78 est également propre à faire enregistrer la valeur du nombre prédéfini de périodes NP_DEF du signal d'horloge externe 24, par exemple dans un registre de stockage 81, et est propre à transmettre ce nombre prédéfini NP_DEF au deuxième module de comptage 28.

A titre d'exemple, le premier module de comptage 26 est propre à compter de manière continue le nombre de périodes du premier signal d'horloge 14, tandis que le logiciel de comptage 78 est propre à réinitialiser à zéro le décompte du nombre de périodes du deuxième signal d'horloge 24, compté par le deuxième module de comptage 28. Puis le logiciel de comptage 78 est propre à lire une première valeur du décompte du nombre de périodes du premier signal d'horloge 14 et commander le décompte du nombre de périodes du deuxième signal d'horloge 24. De plus, le logiciel de comptage 78 est propre à recevoir le signal d'interruption 66 généré par le deuxième module de comptage 28, lorsque le nombre compté de périodes du deuxième signal d'horloge 24 est égal au nombre prédéfini de périodes NP_DEF, et à lire une deuxième valeur du nombre compté de périodes du premier signal d'horloge 14, nombre compté par le premier module de comptage 26, suite à la réception du signal d'interruption 66. Le logiciel de comptage 78 est propre à calculer la différence entre la deuxième valeur du nombre compté de périodes du premier signal d'horloge 14 et la première valeur du nombre compté de périodes du premier signal d'horloge 14, pour compter le nombre effectif de périodes NP_EFF.

Alternativement, le logiciel de comptage 78 effectue, à chaque réception du signal d'interruption 66, une lecture du nombre effectif de périodes comptées NP_EFF du premier signal d'horloge 14 comptées par le premier module de comptage 26, suivie d'une remise à zéro de ce nombre.

Le logiciel d'ajustement 80 est propre à ajuster la fréquence du premier signal de cadence 18 en fonction du nombre effectif de périodes NP_EFF comptées et du nombre théorique de périodes NP_ATT sélectionné. Le logiciel d'ajustement 80 est, par exemple, propre à ajuster la valeur initiale prédéterminée du facteur de division F_DIV du module d'ajustement 62 en fonction du nombre effectif de périodes NP_EFF comptées et du nombre théorique de périodes NP_ATT sélectionné.

Le logiciel d'ajustement 80 est propre à effectuer l'ajustement de la fréquence du premier signal de cadence 18 en fonction du nombre théorique de périodes NP_ATT sélectionné, pour que le premier signal de cadence 18 ait une fréquence sensiblement constante, c'est-à-dire conforme à la première contrainte de dérive en fréquence, quels que soient la fréquence du premier signal d'horloge 14 et le mode de fonctionnement du dispositif de contrôle 6

Le logiciel d'ajustement 80 est, par exemple, propre à multiplier le facteur de division F_DIV de valeur initiale prédéterminée par un ratio entre le nombre effectif de périodes NP_EFF comptées et le nombre théorique de périodes NP_ATT sélectionné, afin d'ajuster la valeur du facteur de division F_DIV.

Avantageusement, le dispositif de contrôle 6 est configuré pour que le module d'ajustement 62 ajuste périodiquement la valeur du facteur de division F_DIV, ce qui permet de prendre en compte les dérives en fréquence du premier signal d'horloge 14, liées à la température et/ou au vieillissement de l'oscillateur 58. Le logiciel d'ajustement 80 est ainsi propre à ajuster la valeur du facteur de division avec une période T_ADJ, dite période d'ajustement. La période d'ajustement T_ADJ est, par exemple, égale à un multiple entier d'une durée du nombre prédéfini de périodes NP_DEF du deuxième signal d'horloge 24. La période d'ajustement T_ADJ est, par exemple, au moins 1000 fois supérieure à la période du deuxième signal d'horloge 24.

La période d'ajustement T_ADJ est, par exemple, comprise entre une première valeur prédéfinie, telle qu'une valeur minimale T_ADJ_MIN, par exemple égale à 1 seconde (s) et une deuxième valeur prédéfinie, telle qu'une valeur maximale T_ADJ_MAX, par exemple égale à 10 s.

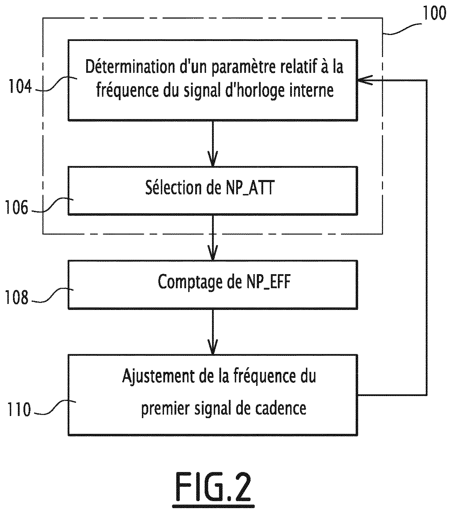

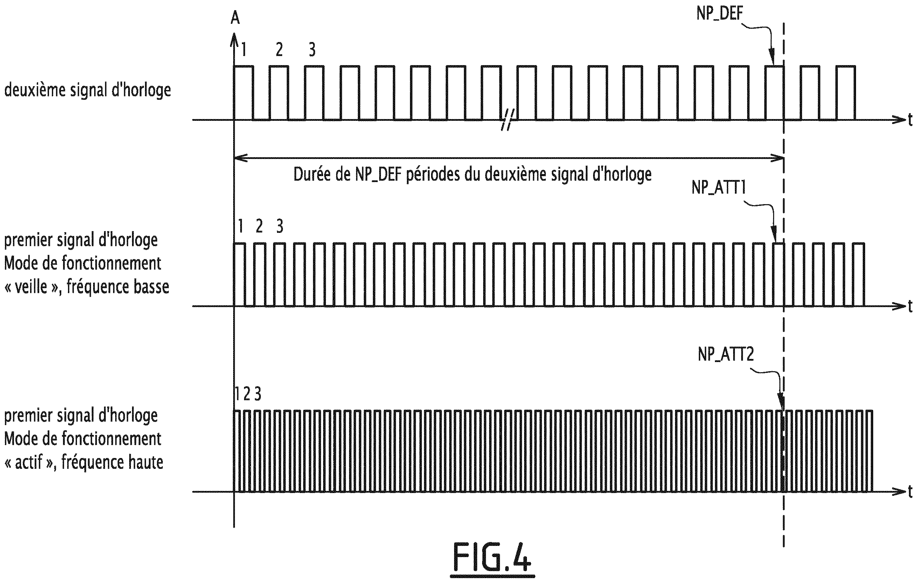

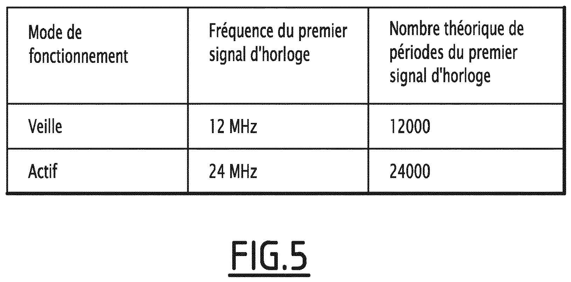

Le fonctionnement du dispositif de contrôle 6 va désormais être présenté à l'aide des figures 4 et 5 et de l'organigramme de la figure 2.

Lors d'une phase de conception de l'application domotique, un nombre théorique de périodes NP_ATTj du premier signal d'horloge 14 à compter pendant la durée du nombre prédéfini de périodes NP_DEF du deuxième signal d'horloge 24, est calculé pour chaque valeur de fréquence Fj du premier signal d'horloge 14. Ensuite, les nombres théoriques NP_ATTj calculés sont intégrées dans le logiciel de mémorisation 70. Dans l'exemple des figures 4 et 5 le premier signal d'horloge 24 est propre à avoir soit une première fréquence F1, soit une deuxième fréquence F2, suivant le mode de fonctionnement du dispositif de contrôle 6, auxquelles sont associés les nombres théorique NP_ATT1, respectivement NP_ATT2.

La mémorisation des nombres théoriques de périodes NP_ATTj peut être faite en associant, pour chaque valeur prédéterminée Fj de la fréquence du premier signal d'horloge 14, le paramètre relatif à cette fréquence et le nombre théorique de périodes NP_ATTj calculé pour cette valeur de fréquence.

Ce paramètre peut être, par exemple, la valeur de la fréquence Fj, ou le mode de fonctionnement associé à cette valeur Fj de fréquence la période premier du signal d'horloge 14, ou bien les valeurs de programmation des registres internes correspondant à la génération de cette fréquence Fj du premier signal d'horloge 14.

En tout état de cause, à chaque valeur prédéterminée Fj de la fréquence du premier signal d'horloge 14 correspond un seul nombre théorique de périodes NP_ATTj.

De plus, la valeur du nombre prédéfini de périodes NP_DEF du deuxième signal d'horloge 24 est intégrée dans le logiciel de comptage 78. En outre, le décompte du nombre de périodes fait par le deuxième module de comptage 28 est initialisé à zéro. Avantageusement, différents paramètres prédéterminés permettant la configuration du module de modification 60, sont mémorisés pour chaque valeur Fj de fréquence du premier signal d'horloge interne 14 dans un tableau de configuration : le paramètre relatif à la fréquence Fj et au nombre théorique de périodes NP_ATTj, correspondant à la valeur nominale de la fréquence Fj considérée. Un tel tableau est illustré à la figure 5 et donne les valeurs du paramètre relatif et du nombre théorique de périodes NP_ATTj lorsque la fréquence du deuxième signal d'horloge 24 est égale à 1MHz et que le nombre prédéfini de périodes NP_DEF est égal à 1000.

Lors d'une phase exécution de l'application domotique, le dispositif de contrôle 6 met en oeuvre le procédé d'ajustement du signal de cadence du premier circuit d'émission/réception16. Un exemple de mise en oeuvre du procédé d'ajustement est illustré à la figure 2.

Lors d'une étape de détermination 100 le dispositif de contrôle 6 détermine un nombre théorique de périodes NP_ATT du premier signal d'horloge 14 à compter pendant une durée d'un nombre prédéfini de périodes NP_DEF du deuxième signal d'horloge 24.

Pour ce faire, lors d'une sous-étape 104, le paramètre relatif à la fréquence du premier signal d'horloge 14, par exemple sa valeur et/ou le mode de fonctionnement du dispositif de contrôle 6, est déterminé par le logiciel de détermination 74. Ensuite, au cours d'une sous-étape de sélection 106, le nombre théorique de périodes NP_ATT, correspondant au paramètre relatif à la fréquence déterminé du premier signal d'horloge 14 est sélectionné et transmis au logiciel de comptage 78.

Ensuite, lors d'une étape de comptage 108, le nombre prédéfini de périodes NP_DEF du deuxième signal 24 est enregistré dans le module de comptage 28. Puis, le logiciel de comptage 78 lit une première valeur du décompte du nombre de périodes du premier signal d'horloge 14, décompte réalisé par le premier module de comptage 26, et commande, en même temps que cette lecture, un démarrage du décompte du nombre de périodes du deuxième signal d'horloge 24, sachant que la valeur du décompte du nombre de périodes du signal d'horloge externe 24 a été préalablement initialisée à 0.

Le deuxième module de comptage 28 compte alors le nombre de périodes du deuxième signal d'horloge 24 et génère le signal d'interruption 66 lorsque le nombre compté de périodes du deuxième signal d'horloge 24 est égal au nombre prédéfini de périodes NP_DEF. Puis, le logiciel de comptage 78 reçoit le signal d'interruption 66 et acquiert, suite à la réception du signal d'interruption 66, une deuxième valeur du nombre compté de périodes du premier signal d'horloge 14, de la part du premier module de comptage 26. Le logiciel de comptage 78 calcule alors la différence entre la deuxième valeur et la première valeur pour obtenir le nombre effectif de périodes NP_EFF du premier signal d'horloge 14 comptées pendant la durée du nombre prédéfini de périodes NP_DEF du deuxième signal d'horloge 24.

L'étape de comptage 108 correspond de manière plus générale à une étape de détermination du nombre effectif de périodes NP_EFF comptées.

Enfin, lors d'une étape d'ajustement 110, la fréquence du premier signal de cadence 18 est ajustée, par exemple via l'ajustement du facteur de division F_DIV en fonction du nombre effectif de périodes NP_EFF comptées du premier signal d'horloge 14 et du nombre théorique de périodes NP_ATT du premier signal d'horloge 14. Puis, le décompte du nombre de périodes du deuxième signal d'horloge 24 fait par le deuxième module de comptage 28 est initialisé à zéro.

Suite à l'étape d'ajustement 110, les étapes 104 à 110 sont répétées périodiquement à la période d'ajustement T_ADJ.

Le dispositif de contrôle 6 permet l'ajustement de la fréquence du premier signal de cadence 18, dans l'exemple, par changement du facteur de division F_DIV du module d'ajustement 62, sans perturber le fonctionnement de l'actionneur ACT. En effet, le module d'ajustement 62 agit uniquement sur le premier signal de cadence 18, qui est délivré seulement au premier circuit d'émission/réception 16. Le fonctionnement de l'unité de traitement d'information 10 et des différents périphériques du dispositif de contrôle n'est donc pas perturbé.

Le dispositif de contrôle 6 permet également d'ajuster la fréquence du premier signal de cadence 18 sensiblement à la même valeur, quelle que soit la fréquence du premier signal d'horloge 14. On entend par «sensiblement la même valeur» de la fréquence du signal de cadence, une valeur qui respecte la première contrainte de précision, permettant ainsi à l'actionneur ACT de communiquer avec le module de communication radioélectrique 8 quel que soit le mode de fonctionnement du dispositif de contrôle 6. Ainsi, le dispositif de contrôle 6 gère ses modes de fonctionnement, et les passages d'un mode de fonctionnement à un autre, de manière transparente. Ce comportement est très avantageux pour un actionneur domotique : il permet au module de communication radioélectrique 8 d'optimiser sa charge de calcul, car il ne doit pas gérer les modes de fonctionnement du dispositif de contrôle 6. Le temps de réponse du système de contrôle 9 est également optimisé, car il n'y a pas de phase de « réveil » à gérer, par exemple si le module de communication radioélectrique 8 reçoit une commande via son interface radioélectrique pendant que dispositif de contrôle 6 est en mode de fonctionnement « basse consommation ».

Le dispositif de contrôle 6 permet d'ajuster le premier signal de cadence 18 par une simple modification de la valeur du facteur de division F_DIV. Si le nombre effectif de périodes NP_EFF est supérieur au nombre théorique de périodes NP_ATT, la fréquence du premier signal d'horloge 14, et donc du premier signal de cadence 18, est supérieure aux fréquences théoriquement désirées respectivement pour le premier signal d'horloge 14 et pour le premier signal de cadence 18. La fréquence du premier signal de cadence 18 est alors diminuée, en augmentant le facteur de division F_DIV.

La nouvelle valeur du facteur de division F_DIV peut être déterminée par lecture dans un tableau pré calculé. En effet, pendant la durée du nombre prédéfini de périodes NP_DEF du deuxième signal d'horloge 24, un seul nombre théorique de périodes NP_ATTj du premier signal d'horloge 14 est attendu pour chaque valeur Fj de la fréquence du premier signal d'horloge 14. Ce nombre théorique de périodes NP_ATTj est déterminé pour la valeur nominale de la fréquence Fj.

Comme les fréquences des premier 14 et deuxième 24 signaux d'horloge peuvent varier, la durée du nombre prédéfini théorique de périodes NP_DEF du deuxième signal d'horloge 24, ainsi que la durée d'une période du premier signal d'horloge 14 peuvent varier aussi. Par conséquent, le nombre effectif de périodes NP_EFF comptées du premier signal d'horloge 14 peut varier.

Ces variations sont limitées, car les premier 14 et deuxième 24 signaux d'horloge respectent la deuxième, respectivement la troisième contrainte de dérive en fréquence. Par conséquent le nombre de valeurs distinctes NP_EFFi possibles que peut prendre le nombre effectif de périodes NP_EFF comptées est limité pour un nombre théorique NP_ATTj donné.

Pour chaque nombre théorique de périodes NP_ATTj et pour chaque nombre NP_EFFi, la valeur du facteur de division peut être pré-calculée et stockée dans un tableau compris dans la mémoire 56.

Lors de l'étape d'ajustement 110, le logiciel d'ajustement 80 va sélectionner dans ce tableau la valeur correspondant au nombre théorique de périodes NP_ATT sélectionné lors de l'étape de détermination 100, et au nombre effectif de périodes NP_EFF comptées lors de l'étape de comptage 108.

Alternativement, la nouvelle valeur du facteur de division F_DIV peut être calculée en temps réel, en fonction du nombre effectif de périodes NP_EFF comptées, et du nombre théorique de périodes NP_ATT sélectionné.

Le fait d'utiliser un nombre de périodes prédéfini NP_DEF du deuxième signal d'horloge 24, plutôt qu'une durée prédéfinie, permet de prendre en compte des variations de la fréquence du deuxième signal d'horloge 24. En outre, puisque le deuxième signal d'horloge 24 est utilisé à la fois pour obtenir le deuxième signal de cadence 46 et pour ajuster la fréquence du premier signal de cadence 18, une éventuelle dérive en fréquence du deuxième signal d'horloge 24 entraînera des dérives dans le même sens des premier 18 et deuxième 46 signaux de cadence, ce qui permet d'avoir des premier 18 et deuxième 46 signaux de cadence dont la fréquence est sensiblement identique. Par conséquent, la robustesse de la communication entre les premier 16 et deuxième 32 circuits d'émission/réception est améliorée.

De plus le fait d'utiliser le signal d'horloge de précision 41, fourni par le quartz de haute précision, pour générer le deuxième signal d'horloge 24, et pour ajuster la fréquence du premier signal de cadence 18 permet d'utiliser dans le système de contrôle 9 une seule source d'horloge précise, par exemple un seul quartz, ce qui implique une réduction du volume et du coût du système de contrôle 9 et du dispositif de contrôle 6.

De plus, la précision du troisième signal d'horloge 42 et le fait d'ajuster le premier signal de cadence 18 à partir du deuxième signal d'horloge 24, obtenu à partir du troisième signal d'horloge 42, permettent de respecter la contrainte de dérive en fréquence du premier signal de cadence, contrainte présentée précédemment dans la partie introductive. La robustesse de la communication entre les premier 16 et deuxième 32 circuits d'émission/réception est ainsi améliorée.

Le deuxième signal d'horloge 24 ne remplace pas le premier signal d'horloge 14, mais permet d'ajuster la fréquence du premier signal de cadence 18, sans modifier la fréquence du premier signal d'horloge 14. Le deuxième signal d'horloge 24 est utilisé comme référence temporelle pour le comptage du nombre effectif de périodes NP_EFF du premier signal d'horloge 14. La fréquence du deuxième signal d'horloge 24 peut être inférieure à la fréquence du signal d'horloge interne 14, puisqu'il n'est pas directement destiné à être utilisé comme signal d'horloge interne par le dispositif de contrôle 6.

Le deuxième signal d'horloge 24 a donc par exemple une fréquence de l'ordre de 1 MHz, tandis que le premier signal d'horloge 14 a par exemple une fréquence supérieure ou égale à 10 MHz. Le deuxième signal d'horloge 24 a donc une fréquence suffisamment faible pour limiter les perturbations électromagnétiques liées à son routage vers le dispositif de contrôle 6.

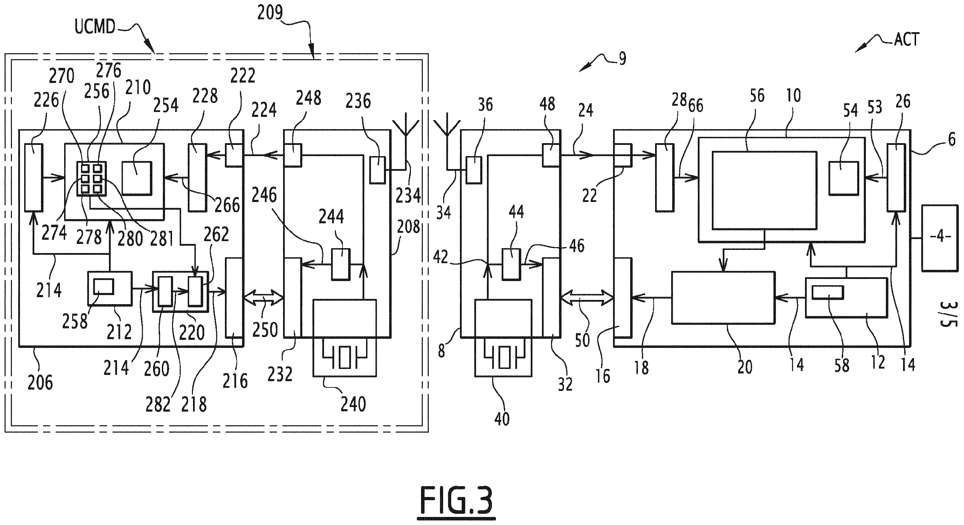

Sur la figure 3, l'actionneur ACT est associé à une unité de commande distante UCMD par radiofréquence, c'est-à-dire à une télécommande. Dans ce mode de réalisation, la télécommande UCMD comprend un système de contrôle 209 similaire quant à son architecture au système de contrôle 9 compris dans l'actionneur ACT décrit ci-dessus. L'application domotique embarquée dans l'unité de commande distante UCMD permet d'envoyer des commandes vers l'actionneur ACT et de recevoir des comptes-rendus d'exécution en provenance de l'actionneur ACT. Cette application est complémentaire à l'application domotique embarquée dans l'actionneur ACT, qui permet de recevoir, interpréter et exécuter des commandes pour le pilotage de l'actionneur ACT, et d'envoyer des comptes-rendus. Les deux applications sont complémentaires, et permettent le contrôle de l'actionneur ACT. Dans ce sens les deux systèmes 9 et 209 sont tous les deux des systèmes de contrôle de l'actionneur ACT. L'architecture matérielle des deux systèmes de contrôle 9, 209 et les moyens logiciels de génération et d'ajustement des différents signaux de cadence sont similaires. Ainsi, sur la figure 3, les éléments du système de contrôle 209 similaires à ceux du système de contrôle 9 ne sont pas décrits à nouveau, et portent les mêmes références augmentées de 200. Les modules de communication radioélectrique 8 et 208 de l'actionneur ACT et de l'unité de commande distante UCMD sont propres à communiquer entre eux par radiofréquence pour que la télécommande UCMD commande le fonctionnement de l'actionneur ACT, et notamment de l'organe d'actionnement électromécanique 4.

En variante, l'unité de commande distante UCMD est propre à commander un actionneur différent de l'actionneur ACT présenté ci-dessus, tout en comprenant un module de communication radioélectrique.

Selon d'autres variantes, l'actionneur domotique pilote un autre équipement qu'un élément mobile de fermeture, d'occultation ou de protection solaire, par exemple un équipement d'éclairage, de chauffage, de ventilation ou de climatisation.

Le dispositif de contrôle 6 permet l'ajustement de la fréquence du premier signal de cadence 18 sans perturber le fonctionnement de l'actionneur ACT. Plus précisément, lorsque, comme représenté à la figure 1, le premier module de génération 20 du premier signal de cadence 18 comprend le module de modification 60 et le module d'ajustement 62 du premier signal de cadence 18, qui sont deux modules distincts, l'ajustement de la fréquence du premier signal de cadence 18 ne perturbe pas le reste du dispositif de contrôle 6 et notamment les périphériques. En effet, le fait que le module d'ajustement soit positionné après le module de modification par rapport au module d'obtention 12 permet d'éviter que son fonctionnement ne perturbe le fonctionnement du reste du dispositif de contrôle 6 et notamment le premier signal d'horloge 14 et le signal d'horloge interne modifié 82.

Avantageusement, le signal d'horloge interne modifié 82 est délivré aux ou à certains périphériques du dispositif de contrôle 6, dont le fonctionnement n'est alors ni perturbé, ni interrompu par les opérations réalisées par le module d'ajustement 62. En d'autres termes, les périphériques fonctionnent de manière globalement indépendante par rapport au circuit d'émission/réception 16 et au module d'ajustement 62 et il n'est pas nécessaire de coordonner les opérations réalisées par les périphériques et le circuit d'émission/réception 16.

De plus, Le dispositif de contrôle 6 permet également d'ajuster la fréquence du premier signal de cadence 18 sensiblement à la même valeur, quelle que soit la fréquence du premier signal d'horloge 14.

## Revendications

1. Procédé d'ajustement d'un signal de cadence (18, 218) d'un circuit d'émission/réception (16, 216) de données asynchrones, le circuit d'émission/réception (16, 216) étant inclus dans un dispositif de contrôle (6, 206) d'un actionneur domotique (ACT), le dispositif de contrôle (6, 206) comprenant des moyens de génération (20, 220) du signal de cadence (18, 218) à partir d'un premier signal d'horloge (14, 214) et des moyens de réception (22, 222) d'un deuxième signal d'horloge (24, 224),
**caractérisé en ce que** le premier signal d'horloge (14, 214) présente une valeur de fréquence parmi une pluralité de valeurs prédéterminées de fréquence, et **en ce que** le procédé comprend :
- une étape de détermination (100) d'un nombre théorique de périodes (NP_ATT) du premier signal d'horloge (14, 214) à compter pendant une durée d'un nombre prédéfini de périodes (NP_DEF) du deuxième signal d'horloge (24, 224), où pendant la durée du nombre prédéfini de périodes du deuxième signal d'horloge un seul nombre théorique de périodes du premier signal d'horloge est attendu pour chaque valeur prédéterminée de fréquence du premier signal d'horloge, l'étape de détermination (100) comprenant une sous-étape de sélection (106) du nombre théorique de périodes (NP_ATT) parmi une pluralité de nombres prédéterminés, cette sélection étant effectuée en fonction d'un paramètre relatif à la valeur de la fréquence du premier signal d'horloge (14, 214) ;
- une étape de comptage (108) d'un nombre effectif de périodes (NP_EFF) du premier signal d'horloge (14, 214) pendant la durée du nombre prédéfini de périodes (NP_DEF) du deuxième signal d'horloge (24, 224) ;
- une étape d'ajustement (110) de la fréquence du signal de cadence (18, 218) par les moyens de génération (20, 220) en fonction du nombre effectif de périodes (NP_EFF) comptées et du nombre théorique de périodes (NP_ATT) sélectionné, de sorte à ce que le signal de cadence (18, 218) ait une fréquence sensiblement constante quelle que soit la valeur de la fréquence du premier signal d'horloge (14, 214).

2. Procédé selon la revendication 1, **caractérisé en ce que** les moyens de génération (20, 220) du signal de cadence (18, 218) sont adaptés pour diviser la fréquence du premier signal d'horloge (14, 214) ou la fréquence d'un premier signal d'horloge modifié (82, 282) dépendant du premier signal d'horloge (14, 214), par un facteur de division ayant une valeur initiale prédéterminée,
et **en ce que**, lors de l'étape d'ajustement (110), la valeur du facteur de division est modifiée en fonction du nombre effectif de périodes (NP_EFF) comptées et du nombre théorique de périodes (NP_ATT).

3. Procédé selon l'une quelconque des revendications précédentes, **caractérisé en ce qu'**au moins les étapes de comptage (108) et d'ajustement (110) sont effectuées périodiquement, à une période d'ajustement, de préférence égale à un multiple entier de la durée du nombre prédéfini de périodes (NP_DEF) du deuxième signal d'horloge (24, 224).

4. Procédé selon la revendication 3, **caractérisé en ce que** la valeur de la période d'ajustement est comprise entre deux valeurs prédéfinies.

5. Procédé selon la revendication 3 ou la revendication 4, **caractérisé en ce que** la période d'ajustement est au moins 1000 fois supérieure à la période du deuxième signal d'horloge (24, 224).

6. Dispositif de contrôle (6, 206) d'un actionneur domotique (ACT) comprenant :
- des moyens d'obtention (12, 212) d'un premier signal d'horloge (14, 214),
- un circuit d'émission/réception (16, 216) de données asynchrones, propre à être cadencé par un signal de cadence (18, 218),
- des premiers moyens de génération (20, 220) du signal de cadence (18, 218) à partir du premier signal d'horloge (14, 214),
- des moyens (22, 222) de réception d'un deuxième signal d'horloge (24, 224) ;
**caractérisé en ce que** le premier signal d'horloge (14, 214) présente une valeur de fréquence parmi une pluralité de valeurs prédéterminées de fréquence, **en ce que** le dispositif comprend des moyens de détermination (54, 254, 56, 256) d'un nombre théorique de périodes (NP _ATT) du premier signal d'horloge (14, 214) à compter pendant une durée d'un nombre prédéfini de périodes (NP_DEF) du deuxième signal d'horloge (24, 224), où pendant la durée du nombre prédéfini de périodes du deuxième signal d'horloge un seul nombre théorique de périodes du premier signal d'horloge est attendu pour chaque valeur prédéterminée de fréquence du premier signal d'horloge, des moyens de sélection (76, 276) du nombre théorique de périodes (NP_ATT) parmi une pluralité de nombres prédéterminés, cette sélection étant effectuée en fonction d'un paramètre relatif à la valeur de la fréquence du premier signal d'horloge (14, 214), et des moyens (26, 226, 28, 228, 78, 278, 81, 281) de comptage d'un nombre effectif de périodes (NP_EFF) du premier signal d'horloge (14, 214) pendant la durée d'un nombre prédéfini de périodes (NP_DEF) du deuxième signal d'horloge (24, 224), et **en ce que** les premiers moyens de génération (20, 220) sont, en outre, adaptés pour ajuster la fréquence du signal de cadence (18, 218) en fonction du nombre effectif de périodes (NP_EFF) comptées et du nombre théorique de périodes (NP _ATT) sélectionné, de sorte à ce que le signal de cadence (18, 218) ait une fréquence sensiblement constante quelle que soit la fréquence du premier signal d'horloge (14, 214).

7. Dispositif de contrôle (6, 206) selon la revendication 6, **caractérisé en ce que** les moyens de comptage comprennent :
- un premier module (26, 226) de comptage du nombre de périodes du premier signal d'horloge (14, 214),
- un registre (81, 281) de stockage de la valeur du nombre prédéfini de périodes (NP_DEF) du deuxième signal d'horloge (24, 224) ; et
- un deuxième module (28, 228) de comptage apte à compter des fronts du deuxième signal d'horloge (24, 224) et à générer un signal informatif (66, 266) lorsque le nombre compté de fronts correspond au nombre prédéfini de périodes (NP_DEF) du deuxième signal d'horloge (24, 224), les moyens de comptage étant adaptés pour acquérir le nombre compté de périodes du premier signal d'horloge (14, 214) suite à la génération du signal informatif (66, 266), pour compter le nombre effectif de périodes (NP_EFF).

8. Système de contrôle (9, 209) d'un actionneur domotique (ACT), le système de contrôle (9, 209) comprenant :
- un dispositif (6, 206) de contrôle de l'actionneur domotique (ACT), le dispositif de contrôle (6, 206) comprenant un premier circuit d'émission/réception (16, 216) de données asynchrones,
- un module de communication radioélectrique (8, 208) comprenant un deuxième circuit d'émission/réception (32, 232) de données asynchrones, le module de communication radioélectrique (8, 208) étant apte à communiquer avec le dispositif de contrôle (6, 206) par l'intermédiaire d'une liaison électrique (50, 250) entre le premier circuit d'émission/réception (16, 216) et le deuxième circuit d'émission/réception (32, 232), et à générer un signal d'horloge radio externe,
**caractérisé en ce que** le dispositif de contrôle (6, 206) est selon la revendication 6 ou la revendication 7, et **en ce que** le deuxième signal d'horloge (24, 224) reçu par les moyens de réception (22, 222) est le signal d'horloge radio externe.

9. Système de contrôle (9, 209) selon la revendication 8, **caractérisé en ce que** le deuxième signal d'horloge (24, 224) a une fréquence au moins 2 fois inférieure à la fréquence du premier signal d'horloge (14, 214) du dispositif de contrôle (6, 206).

10. Actionneur domotique (ACT), comprenant un système de contrôle (9) de l'actionneur (ACT), **caractérisé en ce que** le système de contrôle (9) est selon la revendication 8 ou 9.

11. Unité de commande (UCMD) par radiofréquence d'au moins un actionneur domotique (ACT), l'unité de commande (UCMD) comprenant un système de contrôle (209) de l'actionneur (ACT), **caractérisée en ce que** le système de contrôle (209) est selon la revendication 8 ou 9.

## Patentansprüche

1. Vorrichtung zum Einstellen eines Arbeitstaktsignals (18, 118) eines Sende/Empfangskreises (16, 216) von asynchronen Daten, wobei der Sende/Empfangskreis (16, 216) in einer Steuervorrichtung (6, 206) einer gebäudetechnischen Stellvorrichtung (ACT) enthalten ist und die Steuervorrichtung (6, 206) Mittel (20, 220) zur Erzeugung des Arbeitstaktsignals (18, 218) aus einem ersten Taktsignal (14, 214) und Mittel (22, 222) zum Empfangen eines zweiten Taktsignals (24, 224) umfasst,
**dadurch gekennzeichnet, dass** das erste Taktsignal (14, 214) einen Frequenzwert aus einer Mehrzahl von vorbestimmten Frequenzwerten aufweist und dass das Verfahren umfasst:
- einen Schritt (100) zum Bestimmen einer theoretischen Anzahl von Perioden (NP_ATT) des ersten Taktsignals (14, 214), die während einer Dauer einer vorbestimmten Anzahl von Perioden (NP_DEF) des zweiten Taktsignals (24, 224) zu zählen ist, wobei während der Dauer der vorbestimmten Anzahl von Perioden des zweiten Taktsignals eine einzige theoretische Anzahl von Perioden des ersten Taktsignals für jeden vorbestimmten Frequenzwert des ersten Taktsignals erwartet wird, wobei der Bestimmungsschritt (100) einen Unterschritt (106) zur Auswahl der theoretischen Anzahl von Perioden (NP_ATT) aus einer Mehrzahl von vorbestimmten Anzahlen umfasst, wobei diese Auswahl abhängig von einem den Frequenzwert des ersten Taktsignals (14, 214) betreffenden Parameter durchgeführt wird;
- einen Schritt (108) des Zählens einer effektiven Anzahl von Perioden (NP_EFF) des ersten Taktsignals (14, 214) während der Dauer der vorbestimmten Anzahl von Perioden (NP_DEF) des zweiten Taktsignals (24, 224);
- einen Schritt (110) des Einstellens der Frequenz des Arbeitstaktsignals (18, 218) durch die Erzeugungsmittel (20, 220) abhängig von der effektiven Anzahl von gezählten Perioden (NP_EFF) und der ausgewählten theoretischen Anzahl von Perioden (NP_ATT), derart dass das Arbeitstaktsignal (18, 218) eine im Wesentlichen konstante Frequenz aufweist, wie auch immer der Frequenzwert des ersten Taktsignals (14, 214) sei.

2. Verfahren nach Anspruch 1, **dadurch gekennzeichnet, dass** die Mittel (20, 220) zur Erzeugung des Arbeitstaktsignals (18, 218) geeignet sind, die Frequenz des ersten Taktsignals (14, 214) oder die Frequenz des modifizierten ersten Taktsignals (82, 282), das von dem ersten Taktsignal (14, 214) abhängt, durch einen Teilungsfaktor zu teilen, der einen vorbestimmten Ausgangswert aufweist,
und dass bei dem Einstellschritt (110) der Wert des Teilungsfaktors abhängig von der effektiven Anzahl von gezählten Perioden (NP_EFF) und der theoretischen Anzahl von Perioden (NP_ATT) modifiziert wird.

3. Verfahren nach einem beliebigen der vorhergehenden Ansprüche,
**dadurch gekennzeichnet, dass** mindestens die Schritte des Zählens (108) und des Einstellens (110) periodisch bei einer Einstellperiode, vorzugsweise gleich einem ganzen Vielfachen der Dauer der vorbestimmten Anzahl von Perioden (NP_DEF) des zweiten Taktsignals (24, 224), durchgeführt werden.

4. Verfahren nach Anspruch 3, **dadurch gekennzeichnet, dass** der Wert der Einstellperiode zwischen zwei vorbestimmten Werten liegt.

5. Verfahren nach Anspruch 3 oder Anspruch 4, **dadurch gekennzeichnet, dass** die Einstellperiode mindestens 1000 fach größer als die Periode des zweiten Taktsignals (24, 224) ist.

6. Steuervorrichtung (6, 206) einer gebäudetechnischen Stellvorrichtung (ACT) umfassend:
- Mittel (12, 212) zum Erhalten eines ersten Taktsignals (14, 214),
- einen Sende/Empfangskreis (16, 216) von asynchronen Daten, der geeignet ist, von einem Arbeitstaktsignal (18, 218) getaktet zu werden,
- erste Mittel (20, 220) zur Erzeugung des Arbeitstaktsignals (18, 218) aus dem ersten Taktsignal (14, 214),
- Mittel (22, 222) zum Empfangen eines zweiten Taktsignals (24, 224);
**dadurch gekennzeichnet, dass** das ersten Taktsignal (14, 214) einen Frequenzwert aus einer Mehrzahl von vorbestimmten Frequenzwerten aufweist, dass die Vorrichtung umfasst:
Mittel (54, 245, 56, 256) zum Bestimmen einer theoretischen Anzahl von Perioden (NP_ATT) des ersten Taktsignals (14, 214), die während einer Dauer einer vorbestimmten Anzahl von Perioden (NP_DEF) des zweiten Taktsignals (24, 224) zu zählen ist, wobei während der Dauer der vorbestimmten Anzahl von Perioden des zweiten Taktsignals eine einzige theoretische Anzahl von Perioden des ersten Taktsignals für jeden vorbestimmten Frequenzwert des ersten Taktsignals erwartet wird, Mittel (76, 276) zur Auswahl der theoretischen Anzahl von Perioden (NP_ATT) aus einer Mehrzahl von vorbestimmten Anzahlen, wobei diese Auswahl abhängig von einem den Frequenzwert des ersten Taktsignals (14, 214) betreffenden Parameter durchgeführt wird, und Mittel (26, 226, 28, 228, 78, 278, 81, 281) zum Zählen einer effektiven Anzahl von Perioden (NP_EFF) des ersten Taktsignals (14, 214) während der Dauer der vorbestimmten Anzahl von Perioden (NP_DEF) des zweiten Taktsignals (24, 224), und dass die ersten Mittel (20, 220) zur Erzeugung außerdem angepasst sind, die Frequenz des Arbeitstaktsignals (18, 218) abhängig von der effektiven Anzahl von gezählten Perioden (NP_EFF) und der ausgewählten theoretischen Anzahl von Perioden (NP_ATT) einzustellen, derart dass das Arbeitstaktsignal (18, 218) eine im Wesentlichen konstante Frequenz aufweist, wie auch immer der Frequenzwert des ersten Taktsignals (14, 214) sei.

7. Steuervorrichtung (6, 206) nach Anspruch 6, **dadurch gekennzeichnet, dass** die Zählmittel umfassen:
- ein ersten Modul (26, 226) zum Zählen der Anzahl von Perioden des ersten Taktsignals (14, 214),
- ein Register (81, 281) zum Speichern des Wertes der vorbestimmten Anzahl von Perioden (NP_DEF) des zweiten Taktsignals (24, 224; und
- ein zweiten Zählmodul (28, 228), das geeignet ist, Vorderflanken des zweiten Taktsignals (24, 224) zu zählen und ein Informationssignal (66, 266) zu erzeugen, wenn die gezählte Anzahl der Vorderflanken der vorbestimmten Anzahl von Perioden (NP_DEF) des zweiten Taktsignals (24, 224) entspricht, wobei die Zählmittel angepasst sind, die gezählte Anzahl von Perioden des ersten Taktsignals (14, 214) folgend auf die Erzeugung des Informationssignals (66, 266) zu beschaffen, um die effektive Anzahl von Perioden (NP_EFF) zu zählen.

8. System (9, 209) zum Steuern einer gebäudetechnischen Stellvorrichtung (ACT), wobei das Steuersystem (9, 209) umfasst:
- eine Vorrichtung (6, 206) zum Steuern der gebäudetechnischen Stellvorrichtung (ACT), wobei die Steuervorrichtung (6, 206) einen ersten Sende/Empfangskreis (16, 216) von asynchronen Daten umfasst,
- ein Funkkommunikationsmodul (8, 208), das einen zweiten Sende/Empfangskreis (32, 232) von asynchronen Daten umfasst, wobei das Funkkommunikationsmodul (8, 208) geeignet ist, mit der Steuervorrichtung (6, 206) über eine elektrische Verbindung (50, 250) zwischen dem ersten Sende/Empfangskreis (16, 216) und dem zweiten Sende/Empfangskreis (32, 232) zu kommunizieren und ein externes Funktaktsignal zu erzeugen,
**dadurch gekennzeichnet, dass** die Steuervorrichtung (6, 206) nach Anspruch 6 oder Anspruch 7 ausgebildet ist und dass das von den Empfangsmitteln (22, 222) empfangene zweiten Taktsignals (24, 224) das externe Funktaktsignal ist.

9. Steuersystem (9, 209) nach Anspruch 8, **dadurch gekennzeichnet, dass** das zweiten Taktsignals (24, 224) eine Frequenz aufweist, die mindestens zweimal kleiner als die Frequenz des ersten Taktsignals (14, 214) der Steuervorrichtung (6, 206) ist.

10. Gebäudetechnische Stellvorrichtung (ACT), ein Steuersystem (9) der Stellvorrichtung (ACT) umfassend, **dadurch gekennzeichnet, dass** das Steuersystem (9) nach Anspruch 8 oder 9 ausgebildet ist.

11. Einheit (UCMD) zum Steuern über Funkfrequenz mindestens einer gebäudetechnischen Stellvorrichtung (ACT), wobei die Steuereinheit (UCMD) ein Steuersystem (209) der Stellvorrichtung (ACT) umfasst, **dadurch gekennzeichnet, dass** das Steuersystem (209) nach Anspruch 8 oder 9 ausgebildet ist.

## Claims

1. Method for adjusting a timing signal (18, 218) of a transmitting/receiving circuit (16, 216) for asynchronous data, the transmitting/receiving circuit (16, 216) being included in a control device (6, 206) of a home automation actuator (ACT), the control device (6, 206) comprising generating means (20, 220) for generating the timing signal (18, 218) from a first clock signal (14, 214) and receiving means (22, 222) for receiving a second clock signal (24, 224),
**characterised in that** the first clock signal (14, 214) has a frequency value from among a plurality of predetermined frequency values, and **in that** the method comprises:
- a determination step (100) for determining a theoretical number of periods (NP_ATT) of the first clock signal (14, 214) to be counted during a duration of a predefined number of periods (NP_DEF) of the second clock signal (24, 224), where, during the duration of the predefined number of periods of the second clock signal, a single theoretical number of periods of the first clock signal is expected for each predetermined frequency value of the first clock signal, the determination step (100) comprising a selection sub-step (106) for selecting the theoretical number of periods (NP _ATT) from among a plurality of predetermined numbers, this selection being carried out as a function of a parameter relating to the value of the frequency of the first clock signal (14, 214);
- a counting step (108) for counting an effective number of periods (NP_EFF) of the first clock signal (14, 214) during the duration of the predefined number of periods (NP_DEF) of the second clock signal (24, 224);
- an adjustment step (110) for adjusting the frequency of the timing signal (18, 218) by the generating means (20, 220) as a function of the effective number of periods (NP_EFF) counted and of the theoretical number of periods (NP_ATT) selected, such that the timing signal (18, 218) has a substantially constant frequency whatever the value of the frequency of the first clock signal (14, 214).

2. Method according to claim 1, **characterised in that** the generating means (20, 220) for generating the timing signal (18, 218) are adapted to divide the frequency of the first clock signal (14, 214) or the frequency of a first modified clock signal (82, 282) which is dependent on the first clock signal (14, 214) by a division factor having a predetermined initial value,
and **in that**, during the adjustment step (110), the value of the division factor is modified as a function of the effective number of periods (NP_EFF) counted and of the theoretical number of periods (NP_ATT).

3. Method according to any one of the preceding claims, **characterised in that** at least the counting step (108) and the adjustment step (110) are carried out periodically, at an adjustment period, preferably equal to a whole multiple of the duration of the predetermined number of periods (NP_DEF) of the second clock signal (24, 224).

4. Method according to claim 3, **characterised in that** the value of the adjustment period is between two predefined values.

5. Method according to claim 3 or claim 4, **characterised in that** the adjustment period is at least 1000 times greater than the period of the second clock signal (24, 224).

6. Control device (6, 206) for a home automation actuator (ACT) comprising:
- obtaining means (12, 212) for obtaining a first clock signal (14, 214),
- a transmitting/receiving circuit (16, 216) for asynchronous data, capable of being clocked by a timing signal (18, 218),
- first generating means (20, 220) for generating the timing signal (18, 218) from the first clock signal (14, 214),
- means (22, 222) for receiving a second clock signal (24, 224);
**characterised in that** the first clock signal (14, 214) has a frequency value from among a plurality of predetermined frequency values, **in that** the device comprises determination means (54, 254, 56, 256) for determining a theoretical number of periods (NP_ATT) of the first clock signal (14, 214) to be counted during a duration of a predefined number of periods (NP_DEF) of the second clock signal (24, 224), where, during the duration of the predefined number of periods of the second clock signal, a single theoretical number of periods of the first clock signal is expected for each predetermined frequency value of the first clock signal, selection means (76, 276) for selecting the theoretical number of periods (NP_ATT) from among a plurality of predetermined numbers, this selection being carried out as a function of a parameter relating to the value of the frequency of the first clock signal (14, 214), and means (26, 226, 28, 228, 78, 278, 81, 281) for counting an effective number of periods (NP_EFF) of the first clock signal (14, 214) during the duration of a predefined number of periods (NP_DEF) of the second clock signal (24, 224), and **in that** the first generating means (20, 220) are further adapted to adjust the frequency of the timing signal (18, 218) as a function of the effective number of periods (NP_EFF) counted and of the theoretical number of periods (NP_ATT) selected, such that the timing signal (18, 218) has a substantially constant frequency whatever the frequency of the first clock signal (14, 214).

7. Control device (6, 206) according to claim 6, **characterised in that** the counting means comprise:
- a first module (26, 226) for counting the number of periods of the first clock signal (14, 214),
- a register (81, 281) for storing the value of the predefined number of periods (NP_DEF) of the second clock signal (24, 224), and
- a second counting module (28, 228) capable of counting edges of the second clock signal (24, 224) and of generating an information signal (66, 266) when the counted number of edges corresponds to the predefined number of periods (NP_DEF) of the second clock signal (24, 224), the counting means being adapted to acquire the counted number of periods of the first clock signal (14, 214) following the generation of the information signal (66, 266), to count the effective number of periods (NP_EFF).

8. Control system (9, 209) for a home automation actuator (ACT), the control system (9, 209) comprising:
- a device (6, 206) for controlling the home automation actuator (ACT), the control device (6, 206) comprising a first transmitting/receiving circuit (16, 216) for asynchronous data,
- a radioelectric communication module (8, 208) comprising a second transmitting/receiving circuit (32, 232) for asynchronous data, the radioelectric communication module (8, 208) being capable of communicating with the control device (6, 206) by way of an electrical connection (50, 250) between the first transmitting/receiving circuit (16, 216) and the second transmitting/receiving circuit (32, 232), and of generating an external radio clock signal,
**characterised in that** the control device (6, 206) is in accordance with claim 6 or claim 7, and **in that** the second clock signal (24, 224) received by the receiving means (22, 222) is the external radio clock signal.

9. Control system (9, 209) according to claim 8, **characterised in that** the second clock signal (24, 224) has a frequency which is at least two times slower than the frequency of the first clock signal (14, 214) of the control device (6, 206).

10. Home automation actuator (ACT), comprising a control system (9) for the actuator (ACT), **characterised in that** the control system (9) is in accordance with claim 8 or 9.

11. Radiofrequency control unit (UCMD) for at least one home automation actuator (ACT), the control unit (UCMD) comprising a control system (209) for the actuator (ACT), **characterised in that** the control system (209) is in accordance with claim 8 or 9.
